# EUROPEAN PATENT APPLICATION

(11) **EP 4 537 976 A1**
(43) Date of publication of application: **16.04.2025**
(21) Application number: 23824218.4
(22) Date of filing: 14.06.2023
(51) Int. Cl.: B23Q 3/155, B23Q 5/10, B23Q 5/20

(54) **AUTO TOOL CHANGER OF MACHINE TOOL AND CONTROL METHOD FOR AUTO TOOL CHANGER**

(30) Priority: 14.06.2022 KR 20220072194
(71) Applicant: DN Solutions Co., Ltd., Changwon-si, Gyeongsangnam-do 51537 (KR)
(72) Inventor: JUNG, Jooyoung, Changwon-si, Gyeongsangnam-do 51537 (KR)
(74) Representative: BCKIP Part mbB
(86) International application number: PCT/KR2023/008169
(87) International publication number: WO 2023/244004

(57) **Abstract**

The present disclosure relates to an automatic tool changer for a machine tool and a method of controlling the same, in which a tool change may be automatically performed without being stopped when one of tool pots moves even though a gear motor is used by changing the number of rotations of a dog part in multiple stages in accordance with the number of counted rotations of the dog part and the sequential number of change target tool pots in case that a tool change command is created.

## Description

### [FIELD OF THE DISCLOSURE]

The present disclosure relates to an automatic tool changer for a machine tool and a method of controlling the same, and more particularly, to an automatic tool changer for a machine tool and a method of controlling the same, in which a tool change may be automatically performed without being stopped when one of tool pots moves even though a gear motor is used by changing the number of rotations of a dog part in multiple stages in accordance with the number of counted rotations of the dog part and the sequential number of change target tool pots in case that a tool change command is created.

### [BACKGROUND OF THE DISCLOSURE]

In general, a machine tool refers to a machine used to process metal/non-metal workpieces in a desired shape and dimension using a suitable tool by using various types of cutting or non-cutting methods.

Various types of machine tools including a turning center, a vertical/horizontal machining center, a door-type machining center, a Swiss turning machine, an electric discharge machine, a horizontal NC boring machine, a CNC lathe, and a multi-tasking machining center are being widely used to suit the purpose of the corresponding work in various industrial sites.

The multi-tasking machining center, among the machine tools, refers to a turning center equipped with a multifunctional automatic tool changer (ATC) and a tool magazine in order to perform various types of machining processes such as turning, drilling, tapping, or milling. In the case of the multi-tasking machining center, an operator manually mounts a tool on a tool magazine when loading the tool required for a machining process or changing the tools.

In general, various types of currently used machine tools each have a control panel to which a numerical control (NC) technology or a computerized numerical control (CNC) technology is applied. The control panel is provided with a multifunctional switch or button, and a monitor.

In addition, the machine tool includes a table on which a material, i.e., a workpiece is seated and which transfers the workpiece to machine the workpiece, a palette used to prepare the workpiece to be machined, a spindle coupled to a tool or the workpiece and configured to be rotated, and a tailstock and a steady rest configured to support the workpiece during the machining process.

In general, the machine tool is provided with a transfer unit configured to transfer the table, a tool post, the spindle, the tailstock, and the steady rest along a transfer shaft in order to perform various types of machining processes.

Further, the machine tool generally uses a plurality of tools in order to perform various types of machining processes, and a tool magazine or a turret is used in the form of a tool storage place for receiving and storing the plurality of tools.

The machine tool uses the plurality of tools in order to perform various types of machining processes, and the tool magazine is used in the form of a tool storage place for receiving and storing the plurality of tools.

Further, the machine tool is generally equipped with an automatic palette changer (APC) in order to minimize the non-machining time. The automatic palette changer (APC) automatically changes the palettes between a workpiece machining region and a workpiece loading region. The workpiece may be mounted on the palette.

In addition, the machine tool is generally equipped with the automatic tool changer (ATC) configured to withdraw a specific tool from the tool magazine or remount the tool on the tool magazine based on an instruction of a numerical control unit in order to improve productivity of the machine tool.

In general, the types of tool magazines used for the machine tools, especially the machining center or the turning center, may be broadly classified into two types. One is a drum type tool magazine, and the other is a chain type tool magazine.

In addition, the automatic tool changers (ATC) used in the related art are classified into an arm type automatic tool changer and an armless type automatic tool changer based on a method of clamping a tool.

In general, the arm type automatic tool changer and the armless type automatic tool changer change tools by rotating a rotary plate on which a plurality of tool pots in which the tools are mounted are mounted.

That is, a gear motor or a servo motor is used to rotate the rotary plate of the tool magazine.

However, in case that the automatic tool changer for a machine tool in the related art uses a gear motor, a barrel cam stop section (dwell) occurs each time the tool pots move one by one, and the automatic tool changer is temporarily stopped without continuously rotating, which causes a problem in that a tool change time and a non-machining time are increased, productivity is decreased, and machining costs are increased.

In addition, in case that the automatic tool changer for a machine tool in the related art uses the gear motor, there is a problem in that a stop section (dwell) occurs, vibration is increased, machining precision is degraded, and stability and reliability are degraded.

Moreover, in case that the automatic tool changer for a machine tool in the related art uses the servo motor, various types of separate devices need to be essentially and additionally provided to control a servo driver and a servo motor, which causes a problem in that manufacturing costs are increased, consumer dissatisfaction is caused, and exports are reduced.

Therefore, there is an acute need to develop an automatic tool changer for a machine tool and a method of controlling the same that are capable of changing tools without a stop section (dwell) in the state in which the gear motor is used.

### [Disclosure]

### [SUMMARY]

The present disclosure has been made in an effort to solve the above-mentioned problem, and an object of the present disclosure is to provide an automatic tool changer for a machine tool and a method of controlling the same, in which a first dog part rotates at a basic speed by a number of turns one less than a sequential number of change target tool pots in response to a created tool change command, a motor is decelerated to a first stage deceleration speed and a second sensing part for detecting a rotation of a second dog part is activated when the first dog part completely rotates by the number of turns one less than the sequential number of change target tool pots in accordance with a counting result, the motor is decelerated to a second stage deceleration speed at the moment when a first sensing section enters a first sensing part while the first dog part performs a final rotation of the sequential number of change target tool pots at the first stage deceleration speed in accordance with the counting result, the motor is stopped when it is recognized that a change target tool pot is positioned at an exact position when the second sensing part detects a second sensing section, and direct current braking is released and a motor brake is operated after a predetermined time elapses in a state in which direct current braking of the inverter part is operated and a rotation of a tool magazine is stopped, such that a tool change is performed.

In order to achieve the above-mentioned object, the present disclosure provides an automatic tool changer for a machine tool, the automatic tool changer including: a tool magazine having a plurality of tool pots and disposed rotatably; a drive part configured to generate rotational power for the tool magazine; a rotation part configured to rotate the tool magazine in conjunction with a rotation of the drive part; a dog part disposed on the rotation part and configured to rotate in conjunction with the rotation part; a sensing part disposed adjacent to the dog part and configured to detect the dog part; an inverter part configured to operate the drive part by applying an electric current to the drive part; and a control unit configured to control a tool change, in which when a tool change command is created, the control unit identifies an exact position and the number of counted rotations of the dog part from the sensing part and performs a tool change by rotating the tool magazine while changing a rotational speed of the drive part in multiple stages by adjusting hertz to be applied to the drive part from the inverter part.

In addition, in the exemplary embodiment of the automatic tool changer for a machine tool according to the present disclosure, the tool pots of the automatic tool changer may move one by one each time the rotation part rotates by one turn, and when the tool pot for the tool change is specified in response to the tool change command regardless of the type of motor of the drive part, the rotation part may continuously rotate while a change target tool pot moves to a tool change position.

In addition, in the exemplary embodiment of the automatic tool changer for a machine tool according to the present disclosure, the dog part may include: a first dog part having a first sensing section protruding in a circumferential direction, the first dog part being disposed on the rotation part and configured to rotate in conjunction with the rotation part; and a second dog part having a second sensing section protruding in the circumferential direction, the second dog part being disposed on the rotation part sequentially with the first dog part and configured to rotate in conjunction with the first dog part.

In addition, in the exemplary embodiment of the automatic tool changer for a machine tool according to the present disclosure, the sensing part may include: a first sensing part disposed adjacent to the first dog part to detect the first dog part by means of the first sensing section when the first dog part rotates; and a second sensing part disposed adjacent to the second dog part to detect the second dog part by means of the second sensing section when the second dog part rotates.

In addition, in the exemplary embodiment of the automatic tool changer for a machine tool according to the present disclosure, a circumferential length of the first sensing section may be longer than a circumferential length of the second sensing section.

In addition, in the exemplary embodiment of the automatic tool changer for a machine tool according to the present disclosure, the control unit may be configured to: allow the first sensing part to detect whether the first dog part rotates at a basic speed by a number of turns one less than the sequential number of change target tool pots in response to the created tool change command; and decelerate the motor to a first stage deceleration speed and activate the second sensing part so that the second sensing part detects the rotation of the second dog part when a counting result indicates that the first dog part completely rotates by the number of turns one less than the sequential number of change target tool pots.

In addition, in the exemplary embodiment of the automatic tool changer for a machine tool according to the present disclosure, the control unit may be configured to: decelerate the motor to a second stage deceleration speed at the moment when the first sensing section enters the first sensing part while the first dog part performs a final rotation of the sequential number of change target tool pots at the first stage deceleration speed in accordance with the counting result; stop the motor when it is recognized that the change target tool pot is positioned at the exact position when the second sensing part detects the second sensing section; and release direct current braking and operate a motor brake after a predetermined time elapses in a state in which direct current braking of the inverter part is operated, and the rotation of the tool magazine is stopped.

In addition, in the exemplary embodiment of the automatic tool changer for a machine tool according to the present disclosure, when a tool change command is created, the control unit may release the operation of the motor brake and rotate the motor at the basic speed before the first sensing part detects a rotation of the first dog part.

In addition, in the exemplary embodiment of the automatic tool changer for a machine tool according to the present disclosure, the first stage deceleration speed may be a speed lower than the basic speed, and the second stage deceleration speed may be a speed lower than the first stage deceleration speed.

In addition, in the exemplary embodiment of the automatic tool changer for a machine tool according to the present disclosure, the tool magazine may include: a base part; a drum rotatably disposed on the base part; and a plurality of tool pots disposed to be spaced apart from one another at predetermined intervals in a circumferential direction of the drum and configured to accommodate tools.

In addition, in the exemplary embodiment of the automatic tool changer for a machine tool according to the present disclosure, the drive part may include: a motor installed on the base part and configured to be operated by an electric current applied from the inverter part; a rotary shaft inserted and coupled into the motor and configured to rotate in conjunction with a rotation of the motor; a motor brake disposed on the motor and configured to block a rotation of the motor under the control of the control unit; and a transmission part installed at one side of the rotary shaft and configured to transmit a rotational force.

In addition, in the exemplary embodiment of the automatic tool changer for a machine tool according to the present disclosure, the rotation part may include: a cam shaft provided in parallel with the rotary shaft and rotatably disposed on the base part; a barrel cam spirally formed in a circumferential direction without a horizontal section in an axial direction of the cam shaft; and a connection part disposed at one side of the cam shaft, connected to the transmission part by gear engagement, and configured to rotate in conjunction with the rotary shaft.

In addition, in the exemplary embodiment of the automatic tool changer for a machine tool according to the present disclosure, the motor may be a gear motor.

In order to achieve the above-mentioned object, the present disclosure provides a method of controlling an automatic tool changer for a machine tool, in which a tool change is performed as tool pots of a tool magazine move one by one each time a rotation part rotates by one turn, the method including: storing data for allowing the rotation part to perform the tool change while identifying the number of rotations of a first dog part from a first sensing part, identifying an exact position of a second dog part from a second sensing part, and changing a rotational speed of a drive part in multiple stages by adjusting an electric current to be applied to a motor of the drive part from an inverter part when a tool change command is created; creating the tool change command for the tool change of the tool magazine; calculating the number of rotations one less than the sequential number of change target tool pots in response to the created tool change command; releasing a motor brake; rotating the drive part by operating the motor at a basic speed; counting the number of rotations by detecting, by the first sensing part, whether the first dog part rotates; decelerating the motor to a first stage deceleration speed and decelerating the rotation part to the first stage deceleration speed when a counting result indicates that the first dog part completely rotates by a number of turns one less than the sequential number of change target tool pots; activating the second sensing part to detect a rotation of the second dog part by the second sensing part; decelerating the motor to a second stage deceleration speed at the moment when a first sensing section of the first dog part enters the first sensing part while the first dog part performs a final rotation of the sequential number of change target tool pots at the first stage deceleration speed in accordance with the counting result; positioning a change target tool pot at an exact position by stopping the motor when the second sensing part detects a second sensing section of the second dog part; stopping the rotation of the tool magazine by operating direct current braking of the inverter part; and performing the tool change in response to the tool change command.

In addition, in the exemplary embodiment of the method of controlling an automatic tool changer for a machine tool according to the present disclosure, the method may further include: after the stopping of the rotation of the tool magazine by operating the direct current braking of the inverter part, releasing the direct current braking of the inverter part and operating the motor brake after a predetermined time elapses in the state in which the direct current braking of the inverter part is operated.

According to the automatic tool changer for a machine tool and the method of controlling the same according to the present disclosure, the first dog part rotates at the basic speed by a number of turns one less than the sequential number of change target tool pots in response to the created tool change command, the motor is decelerated to the first stage deceleration speed and the second sensing part for detecting the rotation of the second dog part is activated when the first dog part completely rotates by the number of turns one less than the sequential number of change target tool pots in accordance with the counting result, the motor is decelerated to the second stage deceleration speed at the moment when the first sensing section enters the first sensing part while the first dog part performs the final rotation of the sequential number of change target tool pots at the first stage deceleration speed in accordance with the counting result, the motor is stopped when it is recognized that the change target tool pot is positioned at the exact position when the second sensing part detects the second sensing section, and the direct current braking is released and the motor brake is operated after a predetermined time elapses in a state in which the direct current braking of the inverter part is operated and the rotation of the tool magazine is stopped, such that the tool change is performed. Therefore, even though the gear motor is used by changing the number of rotations of the dog part in multiple stages in accordance with the number of counted rotations of the dog part, the tool change may be automatically performed without being stopped when one of the tool pots moves, thereby reducing the tool change time, the non-machining time, and the machining costs, and improving the productivity.

In addition, according to the automatic tool changer for a machine tool and the method of controlling the same according to the present disclosure, the tool change may be performed only by using the inverter part, the control unit, and the gear motor other than the servo motor without a servo motor and a stop section. Therefore, it is possible to prevent the occurrence of vibration, improve the machining precision, and improve the safety and reliability of the machine tool.

Moreover, according to the automatic tool changer for a machine tool and the method of controlling the same according to the present disclosure, a servo motor does not need to be used, thereby reducing the manufacturing costs and improving the consumer satisfaction.

Furthermore, according to the automatic tool changer for a machine tool and the method of controlling the same according to the present disclosure, the tool change may be performed without a stop section only by using the simple configuration including the gear motor, the inverter part, the control unit, the dog part, and the sensor, thereby miniaturizing the automatic tool changer, reducing the manufacturing costs, and maximizing the spatial utilization.

### [Description of the Drawings]

FIG. 1 is a conceptual view of an automatic tool changer for a machine tool according to the present disclosure.
FIG. 2 is a front perspective view of an automatic tool changer for a machine tool according to an embodiment of the present disclosure.
FIG. 3 is a rear perspective view illustrating a state in which tool pots and a drum of a tool magazine in FIG. 2 are removed.
FIG. 4 is a perspective view illustrating a state in which a base part of the tool magazine in FIG. 3 is additionally removed.
FIG. 5 is a top plan view of FIG. 4.
FIG. 6 is a cross-sectional view taken along line A-A in FIG. 5.
FIG. 7 is a cross-sectional view taken along line B-B in FIG. 5.
FIG. 8 is a conceptual view of an operating process in accordance with an operation sequence of the automatic tool changer for a machine tool according to the embodiment of the present disclosure.
FIG. 9 is a flowchart of a method of controlling the automatic tool changer for a machine tool according to the present disclosure.

### [Detailed Description of Certain Inventive Embodiment]

Hereinafter, an automatic tool changer for a machine tool and a method of controlling the same according to an embodiment of the present disclosure will be described in detail with reference to the drawings. The following exemplary embodiments are provided as examples for fully transferring the spirit of the present disclosure to those skilled in the art. Therefore, the present disclosure is not limited to the exemplary embodiments described below and may be specified as other aspects. Further, in the drawings, a size and a thickness of the apparatus may be exaggerated for convenience. Like reference numerals indicate like constituent elements throughout the specification.

Advantages and features of the present disclosure and methods of achieving the advantages and features will be clear with reference to exemplary embodiments described in detail below together with the accompanying drawings. However, the present disclosure is not limited to the exemplary embodiments disclosed herein but will be implemented in various forms. The exemplary embodiments of the present disclosure are provided so that the present disclosure is completely disclosed, and a person with ordinary skill in the art can fully understand the scope of the present disclosure. The present disclosure will be defined only by the scope of the appended claims. Like reference numerals indicate like constituent elements throughout the specification. In the drawings, sizes and relative sizes of layers and regions may be exaggerated for clarity of description.

The terms used in the present specification are for explaining the exemplary embodiments, not for limiting the present disclosure. Unless particularly stated otherwise in the present specification, a singular form also includes a plural form. The terms such as "comprise (include)" and/or "comprising (including)" used in the specification do not exclude presence or addition of one or more other constituent elements, steps, operations, and/or elements, in addition to the mentioned constituent elements, steps, operations, and/or elements.

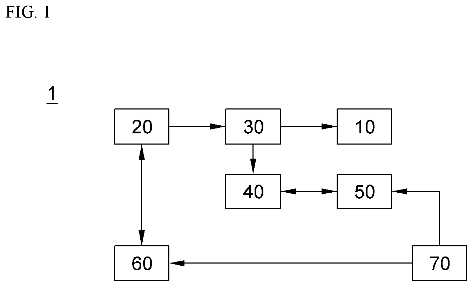

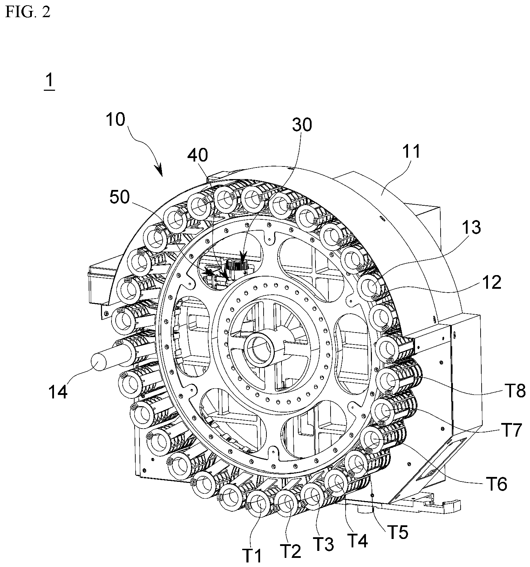

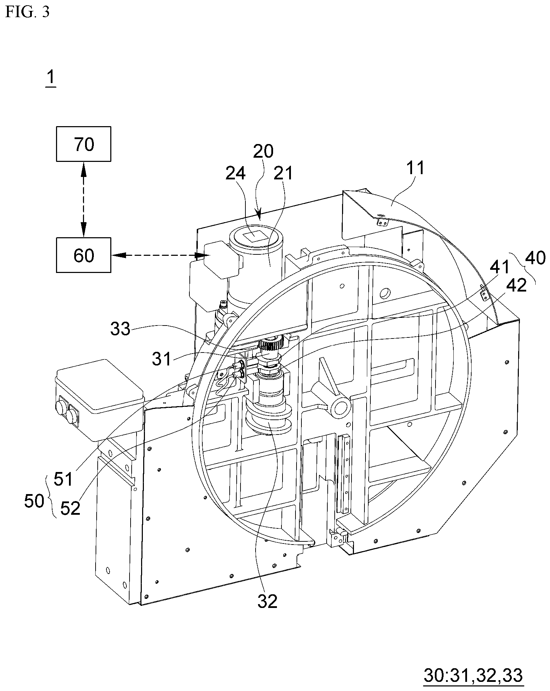

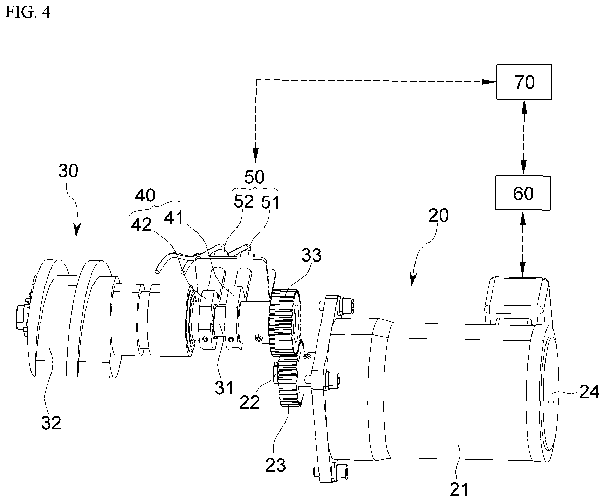

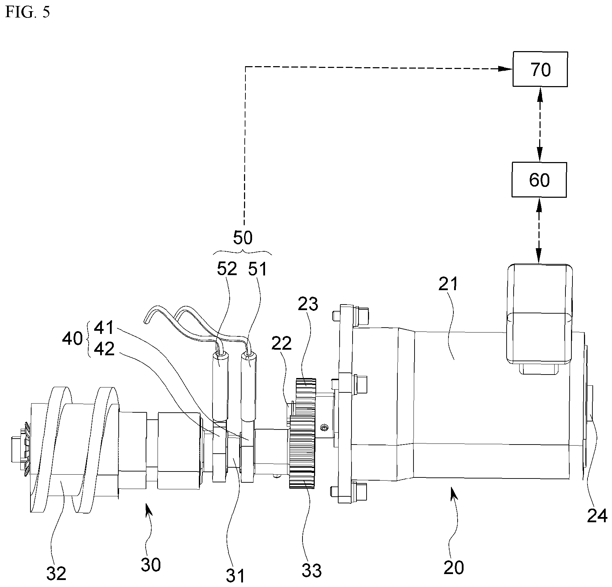

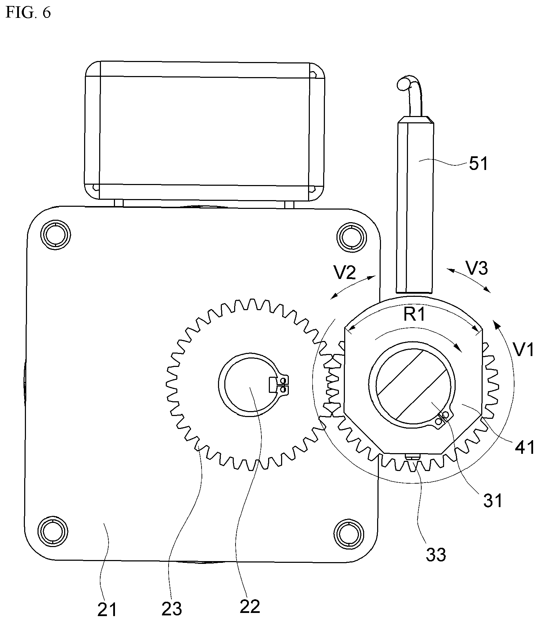

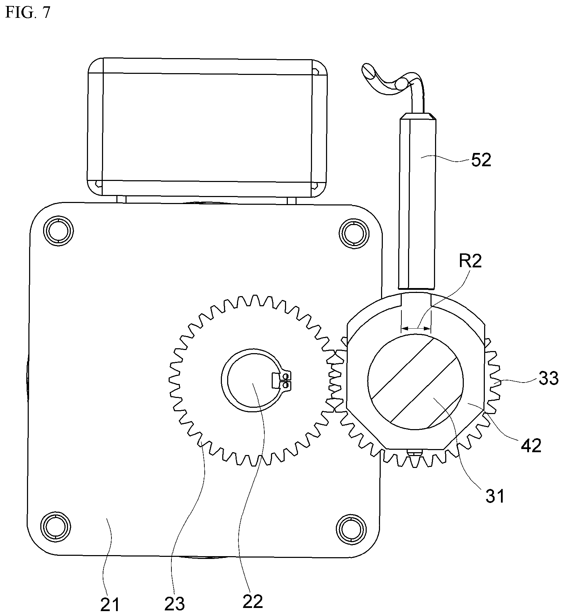

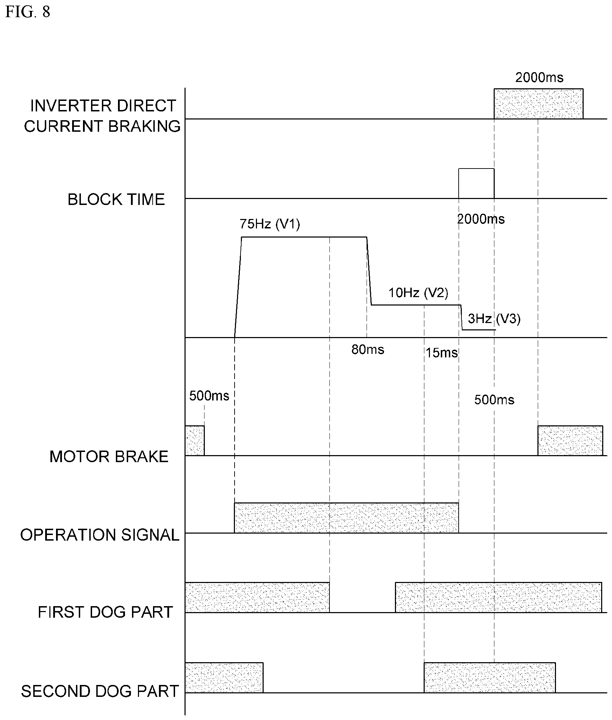

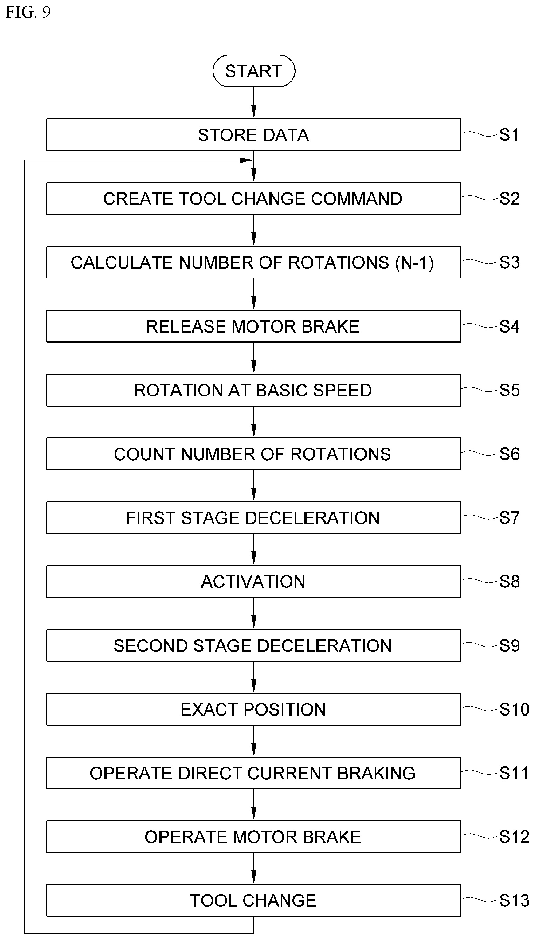

FIG. 1 is a conceptual view of an automatic tool changer for a machine tool according to the present disclosure, FIG. 2 is a front perspective view of an automatic tool changer for a machine tool according to an embodiment of the present disclosure, and FIG. 3 is a rear perspective view illustrating a state in which tool pots and a drum of a tool magazine in FIG. 2 are removed. FIG. 4 is a perspective view illustrating a state in which a base part of the tool magazine in FIG. 3 is additionally removed, and FIG. 5 is a top plan view of FIG. 4. FIG. 6 is a cross-sectional view taken along line A-A in FIG. 5, and FIG. 7 is a cross-sectional view taken along line B-B in FIG. 5. FIG. 8 is a conceptual view of an operating process in accordance with an operation sequence of the automatic tool changer for a machine tool according to the embodiment of the present disclosure. FIG. 9 is a flowchart of a method of controlling the automatic tool changer for a machine tool according to the present disclosure.

An automatic tool changer 1 for a machine tool according to an embodiment of the present disclosure will be described with reference to FIGS. 1 to 8. As illustrated in FIGS. 1 to 7, the automatic tool changer 1 for a machine tool according to the present disclosure includes a tool magazine 10, a drive part 20, a rotation part 30, a dog part 40, a sensing part 50, an inverter part 60, and a control unit 70.

The tool magazine 10 has a plurality of tool pots and is disposed to be rotatable.

That is, as illustrated in FIGS. 1 to 3, the tool magazine 10 of the automatic tool changer for a machine tool according to the exemplary embodiment of the present disclosure includes a base part 11, a drum 12, and tool pots 13.

The base part 11 defines an external shape of a rear side of the tool magazine, has a frame shape, and is installed on a part of a machine tool. That is, the base part is disposed rearward of the tool magazine and provides a space in which the drum, the drive part, the rotation part, the dog part, and the sensing part, which will be described below, are installed.

The drum 12 is rotatably disposed on the base part. That is, the drum is formed in a circular plate shape and rotatably installed on the base part.

The plurality of tool pots 13 are disposed to be spaced apart from one another at predetermined intervals in a circumferential direction of the drum and accommodate tools 14. As described above, many tools are accommodated in the plurality of tool pots, and the tools are changed and used in accordance with processes of machining workpieces, thereby providing convenience for an operator, shortening a machining time, improving productivity, and reducing machining costs.

The drive part 20 generates rotational power for the tool magazine. That is, the drive part generates power for rotating the drum.

As illustrated in FIGS. 1 to 7, the drive part 20 of the automatic tool changer for a machine tool according to the exemplary embodiment of the present disclosure includes a motor 21, a driving shaft 22, a transmission part 23, and a motor brake 24.

The motor 21 is installed on the base part and operated by an electric current applied from the inverter part. The motor of the drive part of the automatic tool changer for a machine tool according to the exemplary embodiment of the present disclosure is configured as a gear motor. That is, instead of a servo motor, a gear motor type, which is a kind of induction motor embedded with a reduction gear and being capable of controlling acceleration and deceleration by means of the inverter part, may be used. Therefore, the motor may operate without a separate servo driver or an additional servo motor control device, thereby reducing manufacturing costs, implementing miniaturization, and improving consumer satisfaction.

The rotary shaft 22 is inserted and coupled into the motor and rotates in conjunction with a rotation of the motor.

The transmission part 23 is installed at one side of the rotary shaft and transmits a rotational force. That is, the transmission part is provided at one side of the rotary shaft and configured in the form of a spur gear. The transmission part is connected to a connection part of the rotation part, which will be described below, by gear engagement and transmits rotational power of the rotary shaft to the rotation part.

The motor brake 24 is disposed in the motor and blocks the rotation of the motor under the control of the control unit. That is, the motor brake disposed in the motor may be variously configured to block the rotation of the motor or the rotation of the rotary shaft under the control of the control unit.

The rotation part 30 rotates the tool magazine in conjunction with the rotation of the drive part. That is, the rotation part 30 rotates in conjunction with the rotation of the drive part by means of the transmission part of the drive part and finally rotates the tool magazine. Therefore, the tool pots disposed on the tool magazine at predetermined angles in the circumferential direction rotate and move to change positions and are changed.

As illustrated in FIGS. 1 to 7, the rotation part 30 of the automatic tool changer for a machine tool according to the exemplary embodiment of the present disclosure includes a cam shaft 31, a barrel cam 32, and a connection part 33.

The cam shaft 31 is provided in parallel with the rotary shaft and rotatably disposed on the base part.

The barrel cam 32 is spirally formed in the circumferential direction without a horizontal section in an axial direction of the cam shaft.

The connection part 33 is disposed at one side of the cam shaft and connected to the transmission part by gear engagement. The connection part 33 rotates in conjunction with the rotary shaft.

Therefore, the barrel cam is formed in a spiral groove shape in the circumferential direction of the cylindrical cam shaft, such that when the cam shaft rotates, the phase is not changed in the axial direction. The barrel cam is formed in a spiral groove so that the phase is continuously changed in the axial direction without a stop section (dwell). Therefore, when the cam shaft is rotated by the rotational force transmitted through the connection part, the cam shaft rotates without stopping, such that the drum of the tool magazine continuously rotates by means of a cam part guided by the barrel cam. In addition, the number of cam parts corresponds to the number of tool pots in the drum.

The dog part 40 is disposed on the rotation part and rotates in conjunction with the rotation part.

The sensing part 50 is disposed adjacent to the dog part and detects the dog part.

The inverter part 60 operates the drive part by applying an electric current to the drive part. That is, the inverter part may not only operate the drive part by adjusting the amount of electric current to be applied to the motor of the drive part under the control of the control unit, but also restrict the rotation of motor by cutting off a direct current of the inverter part, as necessary. Specifically, the inverter part adjusts the hertz to be applied to the drive part.

The control unit 70 controls a tool change. In case that a tool change command is created, the control unit of the present disclosure identifies the number of counted rotations and the exact position of the dog part from the sensing part and performs the tool change by rotating the tool magazine by changing the rotational speed of the drive part in multiple stages by adjusting the hertz to be applied to the drive part from the inverter part.

That is, the tool pots move one by one for each turn of the rotation part. In case that the tool pot for the tool change is specified in response to the tool change command regardless of the type of motor of the drive part, the rotation part continuously rotates while a change target tool pot moves to a tool change position.

The control unit includes numerical control (NC) or computerized numerical control (CNC) and PLC and is embedded with various types of numerical control programs. That is, the control unit is embedded with a machining program, related to a machining part, the drive part, a transfer part, and the like, a drive program, an operating program, and the like. The corresponding program is automatically loaded and executed in response to the operation of the control unit. In addition, the control unit communicates with the drive part, the machining part, the sensing part, the inverter part, and the PLC by means of a predetermined protocol.

In addition, although not illustrated in the drawings, according to the exemplary embodiment of the present disclosure, the control unit includes a main operation part. The main operation part includes a screen display program and a data input program in accordance with a selection of a screen display and performs a function of displaying a software switch on a display screen in accordance with an output of the screen display program and a function of recognizing an ON/OFF state of the software switch and making an instruction about an input and an output for an operation of the machine.

In addition, the main operation unit has a monitor installed in or at one side of the machine tool, the control unit, a casing of the machine tool, or a casing of the control unit and being capable of displaying multifunctional switches or buttons and various types of information. However, the present disclosure is not necessarily limited thereto.

In addition, although not illustrated in the drawings, the control unit of the automatic tool changer for a machine tool according to the present disclosure may include a display part capable of improving convenience for a user or operator by displaying, in real time, the tool change command, the change target tool pot, the tool pot positioned at the change position, the rotational speed of the motor, the sensing result of the sensing part, and the number of rotations of the first dog part.

The display part may include at least one of a liquid crystal display (LCD), a thin-film transistor liquid crystal display (TFT LCD), an organic light-emitting diode display (OLED display), a flexible display, a 3D display, and an e-ink display.

In addition, the display part may be provided in the form of a touch screen and installed on the casing of the machine tool or the control unit or installed at one side of the machine tool or the control unit, and the display part may display various function switches or buttons and various types of information. However, the present disclosure is not necessarily limited thereto.

Therefore, the automatic tool changer for a machine tool according to the present disclosure may perform the tool change only by using the inverter part, the control unit, and the gear motor other than a servo motor without the servo motor and a stop section. Therefore, it is possible to prevent the occurrence of vibration, improve the machining precision, and improve the safety and reliability of the machine tool. Because the servo motor is not used, it is possible to reduce manufacturing costs and improve consumer satisfaction.

As illustrated in FIGS. 1 to 7, the dog part 40 of the automatic tool changer for a machine tool according to the exemplary embodiment of the present disclosure includes a first dog part 41 and a second dog part 42, and the sensing part 50 includes a first sensing part 51 and a second sensing part 52.

The first dog part 41 has a first sensing section R1 protruding in a circumferential direction. The first dog part 41 is disposed on the rotation part and rotates in conjunction with the rotation part.

That is, the first dog part is inserted and installed into the cam shaft of the rotation part in the axial direction and rotates in conjunction with the rotation of the cam shaft of the rotation part.

In addition, the first dog part has a predetermined overall diameter and is formed in an elliptical shape approximately similar to a circular plate or a circle. The first sensing section protrudes to have a predetermined circumference length in the circumferential direction of the first dog part so that the first sensing part of the sensing part easily senses the first dog part when the first dog part rotates.

The second dog part 42 has a second sensing section R2 protruding in the circumferential direction. The second dog part 42 is disposed on the rotation part sequentially with the first dog part and rotates in conjunction with the first dog part.

That is, the second dog part is inserted and installed into the cam shaft of the rotation part in the axial direction sequentially with the first dog part. The second dog part rotates in conjunction with the rotations of the first dog part and the cam shaft of the rotation part in the same direction and at the same speed as the first dog part and the cam shaft.

In addition, the second dog part has a predetermined overall diameter and is formed in an elliptical shape approximately similar to a circular plate or a circle. The second sensing section protrudes to have a predetermined circumference length in the circumferential direction of the second dog part so that the second sensing part of the sensing part easily senses the second dog part when the second dog part rotates.

The first sensing part 51 is disposed adjacent to the first dog part to detect the first dog part by means of the first sensing section when the first dog part rotates. That is, the first sensing part is installed on the base part or the rotation part and disposed adjacent to the first dog part.

In addition, the first sensing part is configured as a proximity sensor. When the first dog part rotates, the first sensing part counts the number of rotations of the first dog part by detecting the rotation of the first dog part by means of the first sensing section of the first dog part that rotates while passing over the first sensing part. A circumferential length of the first sensing section is longer than a circumferential length of the second sensing section, such that the first sensing part changes the rotational speed of the motor by transmitting a signal to the control unit at the moment when the first dog part passes over the first sensing section.

The second sensing part 52 is disposed adjacent to the second dog part to detect the second dog part by means of the second sensing section when the second dog part rotates. That is, the second sensing part is installed on the base part or the rotation part and disposed adjacent to the second dog part.

In addition, the second sensing part is configured as a proximity sensor. When the second dog part rotates, the second sensing part identifies an exact position by detecting the rotation of the second dog part by means of the second sensing section of the second dog part that rotates while passing over the second sensing part, and the second sensing part transmits a motor stop signal to the control unit.

In addition, the circumference length of the first sensing section of the first dog part of the automatic tool changer for a machine tool according to the embodiment of the present disclosure is longer than a circumference length of the second sensing section of the second dog part. That is, because the circumference length of the first sensing section of the first dog part is longer than the circumference length of the second sensing section of the second dog part, the first dog part may serve as a counting dog, and the second sensing part may detect the rotation of the second dog part on the basis of the number of rotations of the first dog part, thereby simply, quickly, and accurately identifying the exact position.

The automatic tool changer for a machine tool according to the present disclosure may perform the tool change without a stop section only by using the simple configuration including the gear motor, the inverter part, the control unit, the dog part, and the sensor, thereby miniaturizing the automatic tool changer, reducing the manufacturing costs, and maximizing the spatial utilization.

An operational principle of the automatic tool change according to the automatic tool changer for a machine tool and the method of controlling the same according to the present disclosure will be described with reference to FIGS. 1 to 8.

A workpiece machining program, information of the tools accommodated in the tool pots, and information on the tool pots are stored in a data storage part of the control unit, and a tool change program for machining workpieces on the basis of the stored information is stored in the data storage part.

In addition, the rotational speed of the motor, which is the drive part, is stored by adjusting the hertz to be applied to the motor of the drive part from the inverter part. The rotational speeds of the motor are stored as a basic speed V1, a first stage deceleration speed V2, and a second stage deceleration speed V3.

Particularly, the first stage deceleration speed V2 is specified as a speed lower than the basic speed V1, and the second stage deceleration speed V3 is specified as a speed lower than the first stage deceleration speed V2.

For example, the electric current to be substantially applied to the motor from the inverter may be adjusted by adjusting the hertz (Hz). Because the speed increases as the hertz increases, the basic speed is designated to 75 Hz, the first stage deceleration speed is designated to 10 Hz, and the second stage deceleration speed is designated to 3 Hz.

The tool change command is created by the control unit in accordance with a current machined state of the workpiece on the basis of the machining program and the tool change program. Specifically, an example in which the tool change command to position T8 is created in response to the tool change command when position T1 is the tool change position will be described with reference to FIGS. 2 to 8.

The number of rotations is calculated in accordance with the positions of the change target tool pot in response to the tool change command. That is, when the motor rotates by one turn, the rotary shaft rotates by one turn. As the rotary shaft rotates by one turn, the cam shaft rotates by one turn. As the cam shaft rotates by one turn, the tool pots rotate one by one. Therefore, when the change target tool pot is T8 in response to the tool change command, the number of rotations is 7.

Thereafter, when the tool change command is created by the control unit, the operation of the motor brake is released in response to a control signal of the control unit before the rotation of the first dog part is detected by the first sensing part. Thereafter, as illustrated in FIG. 8, after a predetermined time (500 ms) elapses, the motor is rotated at the basic speed (75Hz, V1).

As the motor rotates at the basic speed, the connection part of the rotation part and the transmission part engaging with the rotary shaft of the motor rotate, and the cam shaft rotates at the same basic speed as the motor in conjunction with the rotation of the connection part. Therefore, as illustrated in FIG. 8, the first dog part and the second dog part rotate at the basic speed.

When the motor rotates at the basic speed, the control unit allows the first sensing part to detect whether the first dog part rotates at the basic speed by (N-1) turns, which is the number one less than the sequential number (N) of change target tool pots, in response to the created tool change command and counts the number of rotations. That is, when the first sensing section of the first dog part passes over the first sensing part once, the first sensing part counts one turn. Specifically, in order to replace tool T8, when the sequential number (N) of change target tool pots is 7, (N-1), which is the number one less than the sequential number (N) of change target tool pots, is 6, such that the first sensing part detects whether the first dog part rotates by six turns at the basic speed (75Hz, V1) by means of the first sensing section of the first dog part and counts the number of rotations.

In case that the result of detecting, by the first sensing part, whether the first dog part rotates at the basic speed by (N-1) turns that is the number one less than the sequential number (N) of change target tool pots indicates that the first dog part completely rotates by (N-1) turns that is the number one less than the sequential number (N) of change target tool pots, the motor is decelerated to the first stage deceleration speed V2, and the second sensing part is activated so that the second sensing part detects the rotation of the second dog part. That is, when the control unit transmits a signal for decreasing the speed to the first stage deceleration speed to the inverter part, the electric current to be applied to the motor from the inverter part is changed to 10 hertz, such that the motor rotates at the first stage deceleration speed.

Specifically, for example, when six turns of the first dog part are counted by the first sensing part, the second sensing part is activated in response to the signal. When 80 ms elapses after the activation of the second sensing part, a signal is transmitted to the inverter part, such that the rotational speed of the motor is decreased to 10 Hz that is the first stage deceleration speed.

In the state in which the second sensing part is activated to detect the rotation of the second dog part, the control unit transmits the signal for decelerating the motor to the second stage deceleration speed at the moment when the first sensing section enters the first sensing part while the first dog part performs the final rotation (Nth rotation) of the sequential number (N) of change target tool pots at the first stage deceleration speed in accordance with the counting result of the first sensing part. Therefore, the electric current applied to the motor from the inverter part is changed to 3 hertz, such that the motor rotates at the second stage deceleration speed, the cam shaft of the rotation part rotates at the second stage deceleration speed, and as a result, the first dog part and the second dog part rotate at the second stage deceleration speed.

That is, the first dog part rotates by six turns and then rotates at 10 Hz for 15 ms. The speed of the motor is changed to the second stage deceleration speed of 3 Hz, and the motor rotates for 30 ms. As described above, the first dog part serves as a counting dog and a deceleration dog.

Thereafter, when the first dog part performs the final rotation in accordance with the sequential number (N), the control unit recognizes that the change target tool pot is positioned at the exact position when the motor rotates at the second stage deceleration speed lower than the first stage deceleration speed and the second sensing part detects the second sensing section having a shorter circumferential length than the first sensing section. That is, the second sensing section is formed to be much smaller than the first sensing section, and the final rotation is performed slowly, such that the second sensing part quickly and precisely detects the rotation of the second dog part, and the change target tool pot is positioned at the exact position as the change position. As described above, the second dog part serves as an exact position identification dog.

Thereafter, when the change target tool pot is completely positioned at the exact position in response to the signal of the second sensing part, the control unit stops the motor by transmitting a control signal to the inverter part, and the control unit stops the tool magazine by performing direct current braking of the inverter part.

That is, when the change target tool pot T8 rotates by seven turns, moves counterclockwise by seven pots, and is positioned at the exact position as the tool change position, the direct current braking of the inverter part is maintained for 2000 ms in response to a signal of the control unit, such that the rotation of the tool magazine is prevented.

Thereafter, because it is difficult to continuously maintain the direct current braking of the inverter part, the direct current braking is released after a predetermined time elapses. The tool change is performed in a state in which the motor brake operates to prevent the rotation of the drum of the tool magazine.

That is, when about 500 ms elapses after the direct current braking of the inverter part starts, the motor brake operates to prevent the rotation of the drum of the tool magazine, and in this state, the tool change is performed in response to the tool change signal.

A method of controlling the automatic tool changer for a machine tool according to the present disclosure will be described with reference to FIG. 9. As illustrated in FIG. 9, the method of controlling the automatic tool changer for a machine tool according to the present disclosure includes a data storage step S1, a tool change command creation step S2, an (N-1) rotation number calculation step S3, a motor brake release step S4, a basic speed rotation step S5, a rotation number counting step S6, a first stage deceleration step S7, an activation step S8, a second stage deceleration step S9, an exact position step S10, a direct current braking operation step S11, a motor brake operation step S12, and a tool change step S13. The operating process, the operational principle, the configuration, and the contents of the specific devices in the steps are identical to those of the automatic tool changer for a machine tool in the specification of the present disclosure. Hereinafter, the description will be focused on the characteristics of the automatic tool changer for a machine tool with reference to FIG. 9.

As described above, according to the method of controlling the automatic tool change for a machine tool according to the present disclosure, the tool change is basically performed as the tool pots of the tool magazine move one by one each time the rotation part rotates by one turn.

In case that the tool change command is created, the number of rotations of the first dog part is identified from the first sensing part, the exact position of the second dog part is identified from the second sensing part, and the electric current to be applied to the motor of the drive part from the inverter part is adjusted, such that data for allowing the rotation part to perform the tool change while changing the rotational speed of the drive part in multiple stages are stored.

After the data storage step, the tool change command for the tool change of the tool magazine is created by the machining program and the tool change program in accordance with the machining process.

After the tool change command creation step S2, the control unit calculates the number of rotations (N-1) one less than the sequential number (N) of change target tool pots in response to the created tool change command.

After the (N-1) rotation number calculation step S3 of calculating (N-1) one less than the sequential number (N) of change target tool pots, the control unit releases the motor brake. Therefore, in this state, the motor may rotate in response to the electric current signal of the inverter.

After the motor brake release step S4, the motor operates at the basic speed, and the drive part rotates at the basic speed.

After the basic speed rotation step S5, the first sensing part detects whether the first dog part rotates, and the first sensing part counts the number of rotations.

After the rotation number counting step S6, in case that the counting result indicates that the first dog part completely rotates by a number of turns one less than the sequential number of change target tool pots, the motor is decelerated to the first stage deceleration speed, and the rotation part is decelerated to the first stage deceleration speed.

After the first stage deceleration step S7, the second sensing part is activated so that the second sensing part detects the rotation of the second dog part.

After the activation step S8, in accordance with the counting result, the motor is decelerated to the second stage deceleration speed at the moment when the first sensing section of the first dog part enters the first sensing part while the first dog part performs the final rotation of the sequential number of change target tool pots at the first stage deceleration speed.

After the second stage deceleration step S9, when the second sensing part detects the second sensing section of the second dog part, the motor is stopped, and the change target tool pot is positioned at the exact position.

After the exact position step S10, the direct current braking of the inverter part is operated, and the rotation of the tool magazine is stopped.

After the direct current braking operation step S11, when a predetermined time elapses in the state in which the direct current braking of the inverter part is operated, the direct current braking of the inverter part is released, and the motor brake is operated.

After the motor brake operation step S12, the tool change is performed in response to the tool change command.

As described above, according to the automatic tool changer for a machine tool and the method of controlling the same according to the present disclosure, the first dog part rotates at the basic speed by a number of turns one less than the sequential number of change target tool pots in response to the created tool change command, the motor is decelerated to the first stage deceleration speed and the second sensing part for detecting the rotation of the second dog part is activated when the first dog part completely rotates by the number of turns one less than the sequential number of change target tool pots in accordance with the counting result, the motor is decelerated to the second stage deceleration speed at the moment when the first sensing section enters the first sensing part while the first dog part performs the final rotation of the sequential number of change target tool pots at the first stage deceleration speed in accordance with the counting result, the motor is stopped when it is recognized that the change target tool pot is positioned at the exact position when the second sensing part detects the second sensing section, and the direct current braking is released and the motor brake is operated after a predetermined time elapses in a state in which the direct current braking of the inverter part is operated and the rotation of the tool magazine is stopped, such that the tool change is performed. Therefore, even though the gear motor is used by changing the number of rotations of the dog part in multiple stages in accordance with the number of counted rotations of the dog part, the tool change may be automatically performed without being stopped when one of the tool pots moves, thereby reducing the tool change time, the non-machining time, and the machining costs, improving the productivity, preventing the occurrence of vibration, improving the machining precision, improving the stability and reliability of the machine tool, excluding the use of a servo motor, reducing the manufacturing costs, and improving the consumer satisfaction.

While the present disclosure has been described above with reference to the exemplary embodiments of the present disclosure in the detailed description of the present disclosure, it may be understood, by those skilled in the art or those of ordinary skill in the art, that the present disclosure may be variously modified and changed without departing from the spirit and scope of the present disclosure disclosed in the claims. Accordingly, the technical scope of the present disclosure should not be limited to the contents disclosed in the detailed description of the specification but should be defined only by the claims.

### [Description of Main Reference Numerals of Drawings]

1: Automatic tool changer
10: Tool magazine
20: Drive part
30: Rotation part
40: Dog part
50: Sensing part
60: Inverter part
70: Control unit

## Claims

1. An automatic tool changer for a machine tool, the automatic tool changer comprising:
a tool magazine having a plurality of tool pots and disposed rotatably;
a drive part configured to generate rotational power for the tool magazine;
a rotation part configured to rotate the tool magazine in conjunction with a rotation of the drive part;
a dog part disposed on the rotation part and configured to rotate in conjunction with the rotation part;
a sensing part disposed adjacent to the dog part and configured to detect the dog part;
an inverter part configured to operate the drive part by applying an electric current to the drive part; and
a control unit configured to control a tool change,
wherein when a tool change command is created, the control unit identifies an exact position and the number of counted rotations of the dog part from the sensing part and performs a tool change by rotating the tool magazine while changing a rotational speed of the drive part in multiple stages by adjusting hertz to be applied to the drive part from the inverter part.

2. The automatic tool changer of claim 1, wherein the tool pots of the automatic tool changer move one by one each time the rotation part rotates by one turn and
wherein when the tool pot for the tool change is specified in response to the tool change command regardless of the type of motor of the drive part, the rotation part continuously rotates while a change target tool pot moves to a tool change position.

3. The automatic tool changer of claim 2, wherein the dog part comprises:
a first dog part having a first sensing section protruding in a circumferential direction, the first dog part being disposed on the rotation part and configured to rotate in conjunction with the rotation part; and
a second dog part having a second sensing section protruding in the circumferential direction, the second dog part being disposed on the rotation part sequentially with the first dog part and configured to rotate in conjunction with the first dog part.

4. The automatic tool changer of claim 3, wherein the sensing part comprises:
a first sensing part disposed adjacent to the first dog part to detect the first dog part by means of the first sensing section when the first dog part rotates; and
a second sensing part disposed adjacent to the second dog part to detect the second dog part by means of the second sensing section when the second dog part rotates.

5. The automatic tool changer of claim 4, wherein a circumferential length of the first sensing section is longer than a circumferential length of the second sensing section.

6. The automatic tool changer of claim 5, wherein the control unit is configured to:
allow the first sensing part to detect whether the first dog part rotates at a basic speed by a number of turns one less than the sequential number of change target tool pots in response to the created tool change command; and
decelerate the motor to a first stage deceleration speed and activate the second sensing part so that the second sensing part detects the rotation of the second dog part when a counting result indicates that the first dog part completely rotates by the number of turns one less than the sequential number of change target tool pots.

7. The automatic tool changer of claim 6, wherein the control unit is configured to:
decelerate the motor to a second stage deceleration speed at the moment when the first sensing section enters the first sensing part while the first dog part performs a final rotation of the sequential number of change target tool pots at the first stage deceleration speed in accordance with the counting result;
stop the motor when it is recognized that the change target tool pot is positioned at the exact position when the second sensing part detects the second sensing section; and
release direct current braking and operate a motor brake after a predetermined time elapses in a state in which direct current braking of the inverter part is operated, and the rotation of the tool magazine is stopped.

8. The automatic tool changer of claim 7, wherein when a tool change command is created, the control unit releases the operation of the motor brake and rotates the motor at the basic speed before the first sensing part detects a rotation of the first dog part.

9. The automatic tool changer of claim 7, wherein the first stage deceleration speed is a speed lower than the basic speed, and the second stage deceleration speed is a speed lower than the first stage deceleration speed.

10. The automatic tool changer of claim 2, wherein the tool magazine comprises:
a base part;
a drum rotatably disposed on the base part; and
a plurality of tool pots disposed to be spaced apart from one another at predetermined intervals in a circumferential direction of the drum and configured to accommodate tools.

11. The automatic tool changer of claim 10, wherein the drive part comprises:
a motor installed on the base part and configured to be operated by an electric current applied from the inverter part;
a rotary shaft inserted and coupled into the motor and configured to rotate in conjunction with a rotation of the motor;
a motor brake disposed on the motor and configured to block a rotation of the motor under the control of the control unit; and
a transmission part installed at one side of the rotary shaft and configured to transmit a rotational force.

12. The automatic tool changer of claim 11, wherein the rotation part comprises:
a cam shaft provided in parallel with the rotary shaft and rotatably disposed on the base part;
a barrel cam spirally formed in a circumferential direction without a horizontal section in an axial direction of the cam shaft; and
a connection part disposed at one side of the cam shaft, connected to the transmission part by gear engagement, and configured to rotate in conjunction with the rotary shaft.

13. The automatic tool changer of claim 11, wherein the motor is a gear motor.

14. A method of controlling an automatic tool changer for a machine tool, in which a tool change is performed as tool pots of a tool magazine move one by one each time a rotation part rotates by one turn, the method comprising:
storing data for allowing the rotation part to perform the tool change while identifying the number of rotations of a first dog part from a first sensing part, identifying an exact position of a second dog part from a second sensing part, and changing a rotational speed of a drive part in multiple stages by adjusting an electric current to be applied to a motor of the drive part from an inverter part when a tool change command is created;
creating the tool change command for the tool change of the tool magazine;
calculating the number of rotations one less than the sequential number of change target tool pots in response to the created tool change command;
releasing a motor brake;
rotating the drive part by operating the motor at a basic speed;
counting the number of rotations by detecting, by the first sensing part, whether the first dog part rotates;
decelerating the motor to a first stage deceleration speed and decelerating the rotation part to the first stage deceleration speed when a counting result indicates that the first dog part completely rotates by a number of turns one less than the sequential number of change target tool pots;
activating the second sensing part to detect a rotation of the second dog part by the second sensing part;
decelerating the motor to a second stage deceleration speed at the moment when a first sensing section of the first dog part enters the first sensing part while the first dog part performs a final rotation of the sequential number of change target tool pots at the first stage deceleration speed in accordance with the counting result;
positioning a change target tool pot at an exact position by stopping the motor when the second sensing part detects a second sensing section of the second dog part;
stopping the rotation of the tool magazine by operating direct current braking of the inverter part; and
performing the tool change in response to the tool change command.

15. The method of claim 14, further comprising:
after the stopping of the rotation of the tool magazine by operating the direct current braking of the inverter part, releasing the direct current braking of the inverter part and operating the motor brake after a predetermined time elapses in the state in which the direct current braking of the inverter part is operated.
